(19) Europäisches Patentamt
European Patent Office
Office européen des brevets

(11) **EP 1 296 439 A2**

(12) **EUROPEAN PATENT APPLICATION**

(43) Date of publication:
**26.03.2003 Bulletin 2003/13**

(51) Int Cl.⁷: **H02K 19/16**, H02K 3/28

(21) Application number: **02078491.4**

(22) Date of filing: **23.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **21.09.2001 US 960697**

(71) Applicant: **Delphi Technologies, Inc.**
**Troy, MI 48007 (US)**

(72) Inventors:
• **Buening, Duane J.**
**Anderson, IN 46012 (US)**
• **Holbrook, Gregory R.**
**Pendleton, IN 46064 (US)**
• **Hull, Michael L.**
**Anderson, IN 46012 (US)**
• **Krefta, Ronald J.**
**Noblesville, IN 46060 (US)**

(74) Representative: **Denton, Michael John**
**Delphi Automotive Systems,**
**Centre Technique Paris,**
**117, avenue des Nations,**
**B.P. 60059**
**95972 Roissy Charles de Gaulle Cédex (FR)**

(54) **Five phase alternating current generator**

(57) An alternating current (AC) generator (20) includes a casing (22) or housing defining an accommodation space (24) therein. A stator assembly (26) is rigidly mounted in the accommodation space (24) in the casing (22) and includes stator slots (42) and a 5-phase winding (46) distributed through and among the stator slots (42). A rotor assembly (28) is rotatably disposed inside the stator assembly (26) and includes a plurality of pairs of opposed pole members (36, 38). Pairs of pole members (36, 38) are configured for energization in opposite magnetic polarity. A plurality of rectifiers (68) rectify output voltages generated by the 5-phase windings (46).

Fig.5.

EP 1 296 439 A2

Fig.6.

**Description**

TECHNICAL FIELD

The invention relates to alternating current (AC) generators and more particularly to a 5-phase generator utilizing a stator-winding pattern to reduce generator magnetic noise.

BACKGROUND OF THE INVENTION

It is known in the art relating to alternating current (AC) generators to utilize a conventional, thirty-six slot/tooth stator twelve rotor pole 3-phase configuration alternator to furnish a vehicle's electrical system with an appropriate supply of current to meet the electrical demands of the vehicle. These three phase generator designs are known to produce a significant amount of magnetic noise while being operated.

In an effort to reduce the magnetic noise of the conventional three phase generator, an alternative alternating current generator design having two sets of three-phase windings, has been effectively used. Such a generator requires a seventy-two slot/tooth stator which is expensive to manufacture and difficult to wind.

The need exists to further reduce the level of magnetic noise produced by AC generators, particularly those used in vehicle applications, improve electrical efficiency and reduce manufacturing cost.

SUMMARY OF THE INVENTION

The present invention provides a robust 5-phase alternating current (AC) generator having significant reduction in magnetic noise and enhanced performance. The generator provides reduced ripple on generator output vis-a-vis a three-phase configured generator and costs less to manufacture and wind as compared to a 72 slot, dual three-phase design generator.

According to the invention, an alternating current (AC) generator is provided that includes a casing or housing defining an accommodation space therein. A stator assembly is rigidly mounted in the accommodation space in the casing and includes stator slots and a 5-phase winding distributed through and among the stator slots. A rotor assembly is rotatably disposed inside the stator assembly and includes a plurality of pairs of opposed pole members. Pairs of pole members are configured for energization in opposite magnetic polarity. A plurality of rectifiers rectify output voltages generated by the 5-phase windings.

These and other features and advantages of the invention will be more fully understood from the following description of certain specific embodiments of the invention taken together with the accompanying drawings.

BRIEF DESCRIPTION OF THE DRAWINGS

In the drawings:

FIG. 1 is a sectional view of an AC generator incorporating a stator assembly including a five phase winding constructed in accordance with the present invention;
FIG. 2 is a plan view of a sixty slot stator in accordance with the invention;
FIG. 3 is an enlarged sectional view of stator teeth illustrating tooth profile;
FIG. 4 is a schematic view of the stator slot/teeth illustrating a general 5 phase winding of the stator in accordance with the invention wherein a reverse progressive wind of the wire is used;
FIG. 5 is a schematic view illustrating a star connection scheme for the 5-phase windings of FIG. 4;
FIG. 6 is a schematic view illustrating a pentagon connection scheme for the 5-phase windings of FIG. 4;
FIG. 7 is a schematic view of the stator slot/teeth illustrating an alternate 5 phase winding of the stator in accordance with the invention wherein the phase lead positions are shifted and a reverse progressive wind of the wire is used;
FIG. 8 is a schematic view illustrating a star connection scheme for the 5-phase windings of FIG. 7;
FIG. 9 is a schematic view illustrating a pentagon connection scheme for the 5-phase windings of FIG. 7;
FIG. 10 is schematic view of the stator slot/teeth illustrating the 5-phase winding of the invention wherein a wave type winding is used;
FIG. 11 is a schematic view of the stator slot/teeth illustrating parallel 5-phase windings of the invention having both A and B parts;
FIG. 12 is a graph illustrating magnetic noise as a function of generator RPM for a standard 3-phase generator and a 5-phase generator constructed in accordance with the invention;
FIG. 13 is a schematic illustration of a three phase generator stator winding connected in a star configuration;
FIG. 14 is a schematic illustration of a five phase generator stator winding connected in a star configuration;
FIG. 15 is a schematic view of the stator slot/teeth illustrating a 5 phase winding of the stator utilizing a short pitch wind of the wire in accordance with the invention;
FIG. 16 is a schematic illustration of a five phase machine applied to a rectifier bridge; and
FIG. 17 is a schematic illustration of a five phase machine applied to a rectifier bridge with a diode pair included to capture zero sequence current.

DESCRIPTION OF THE PREFERRED EMBODIMENT

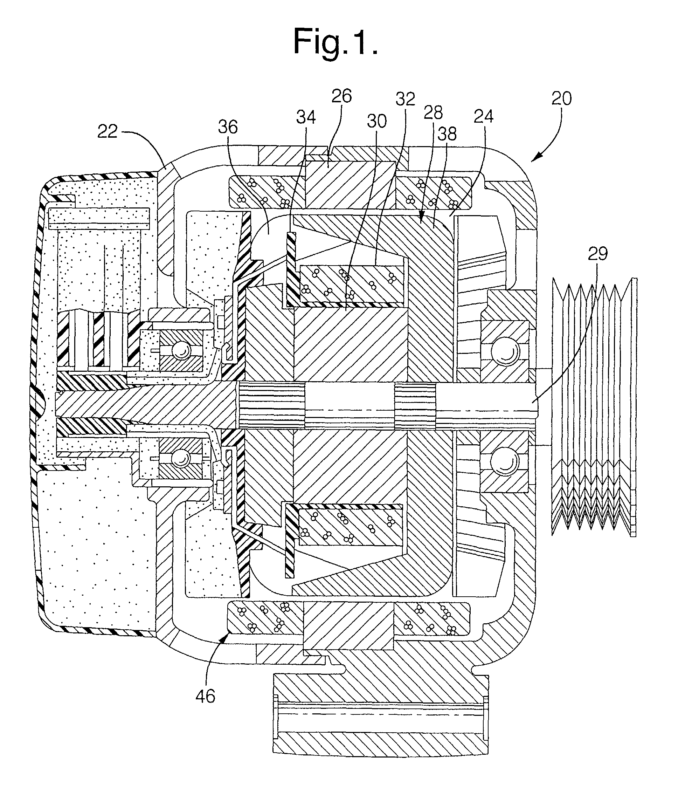

Referring to FIG. 1, there is shown an alternating current (AC) generator 20 embodying the present invention that utilizes a new stator-winding pattern to reduce generator magnetic noise. The alternator generally comprises a casing or housing 22 having an accommodation space 24 therein. A substantially cylindrical stator assembly or armature 26 is supported in the accommodation space 24. A rotor assembly 28 is rotatably supported inside the stator assembly 26. The rotor assembly 28 includes a rotor shaft 29 on which a rotor core 30 including a field coil 32 wound upon a bobbin 34 is supported. All other rotating magnetic circuit structures as well as alternately disposed pole members 36 and 38 are supported on the rotor shaft 29.

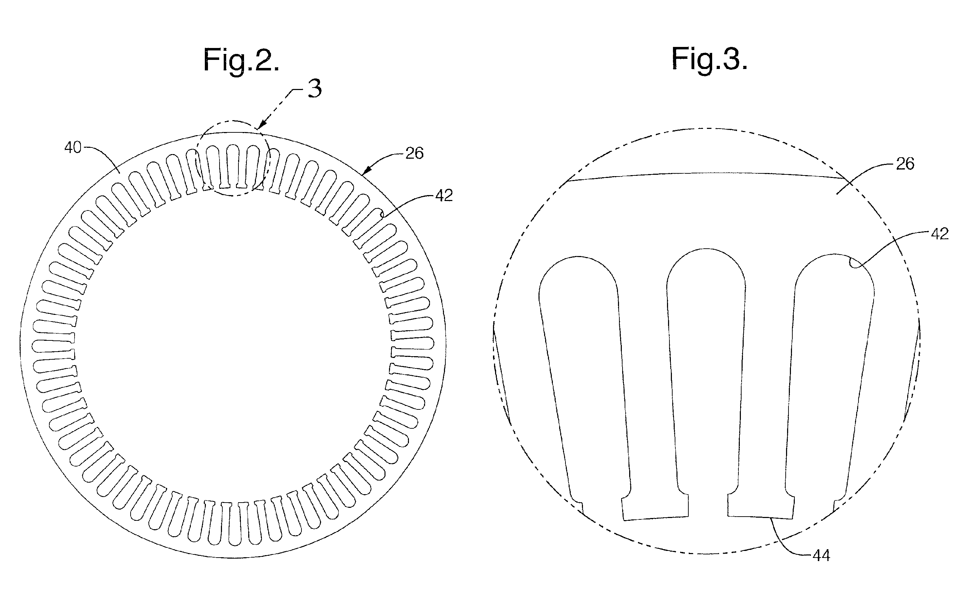

The stator assembly 26 as shown in FIG. 2 includes a ring 40 formed with sixty equally spaced slots 42 disposed around the ring between a corresponding number of stator teeth 44. The stator assembly 26 includes a five-phase winding with each phase being offset 72 electrical degrees, distributed through and among the stator slots 42 so that a five-phase alternating current is obtained by twelve magnetic poles of the rotor assembly 28 as hereinafter more fully described. In accordance with the invention the number of stator slots, $S_1$, is represented as follows:

$$S_1 = 10n\,p$$

where $n$ is any integer (1 in the preferred embodiment), and $p$ is the number of rotor pole pairs (any positive integer).

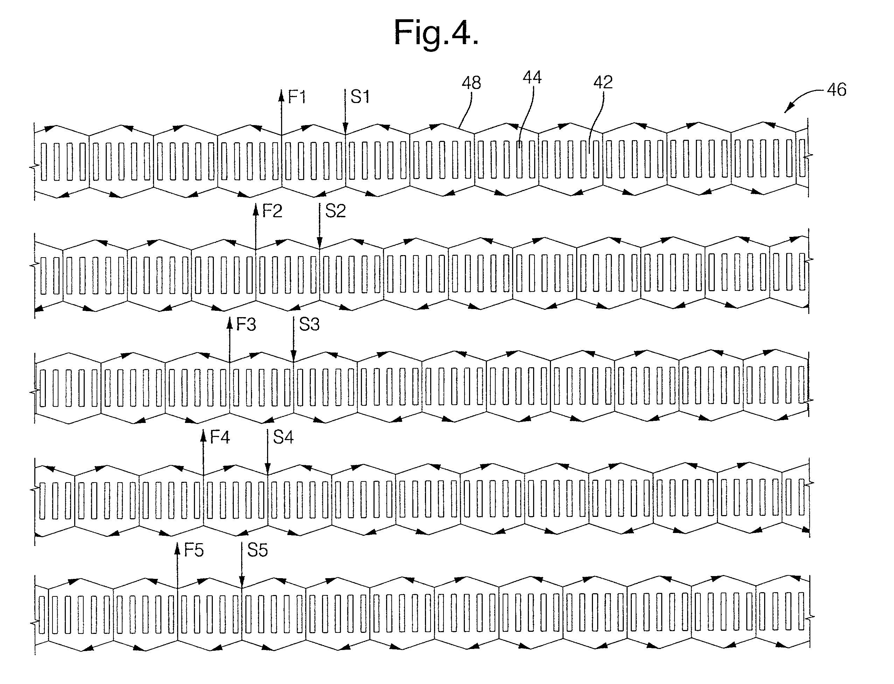

In a generic embodiment of the invention illustrated in FIG. 4, a 5-phase stator winding 46 is wound onto 60 slot/tooth ring 40 by winding an enameled copper wire 48 beginning at S 1 and winding around five stator teeth 44, then advancing 5 stator teeth and winding around the next five stator teeth and repeating this pattern until all the stator teeth are wound, completing one phase, and the wire is brought out at F1. A second phase of the 5-phase windings is similarly wound beginning at S2 which is two stator slots advanced from the beginning winding of the first set of 5-phase windings, S1, finishing at F2. A third phase of the 5-phase winding is similarly wound beginning at S3 which is two stator slots advanced from the beginning winding of the second set a 5-phase windings, S2, finishing at F3. A fourth phase of the 5-phase winding is similarly wound beginning at S4 which is two stator slots 42 advanced from the beginning winding of the third set a 5-phase windings, S3, finishing at F4. And a fifth phase of the 5-phase winding is similarly wound beginning at S5 which is two stator slots 42 advanced from the beginning winding of the fourth set a 5-phase windings, S4, finishing at F5.

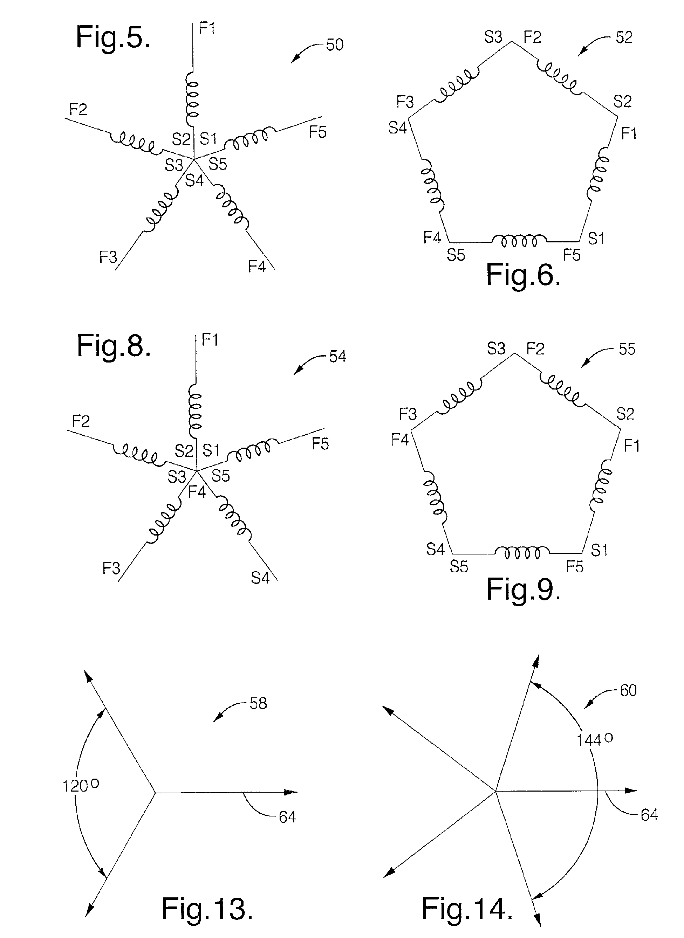

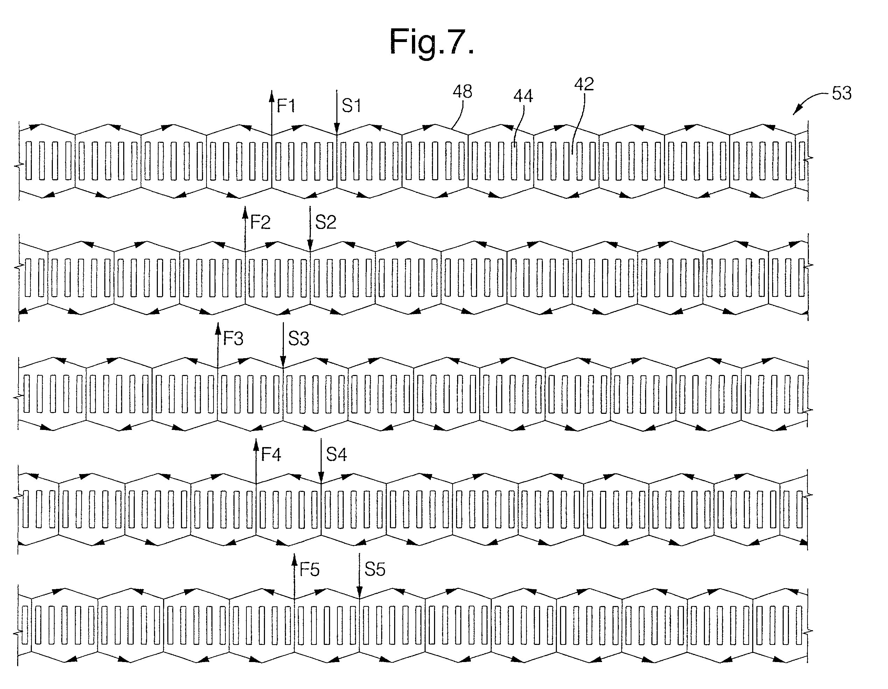

As illustrated in FIG. 4, the winding pattern is reverse progressive wind and any number of turns can be selected for winding around the groups of 5 stator slots 42. The windings for each phase need only maintain the appropriate relative spacing, or offset, and for practicality, the ends of the copper wires 48 are kept close together for tying which can be in a star connection configuration 50 as illustrated in FIG. 5 or in a pentagon connection configuration 52 as illustrated in FIG. 6. With this winding arrangement twelve coils per phase are created, 60 teeth/5 slots.

FIG. 7 illustrates a winding arrangement 53 similar to the winding arrangement illustrated in FIG. 4 wherein the windings of the first three sets of phase windings are the same, yet the fourth and fifth phase windings are advanced or indexed to keep the leads closer together.

Herein, the fourth phase of the 5-phase windings is again similarly wound around 5 stator teeth 44, advanced 5 stator teeth and wound around 5 stator teeth, beginning at S4, which is effectively two stator slots 42 advanced from the beginning winding of the third set of 5-phase windings, S3, or one slot advanced from the beginning of the first set of 5-phase windings, S1, which gives the same angular offset, finishing at F4. Finally the fifth phase of the 5-phase windings is similarly wound beginning at S5, which is effectively two stator slots 42 advanced from the beginning winding of the fourth set of 5-phase windings, S4, or three slots advanced from the beginning of the first set of 5-phase windings, S1, giving the same angular offset, finishing at F5.

As illustrated in FIG. 7, the winding pattern is reverse progressive wind resulting in the connection configurations as illustrated in FIG. 8, the star connection configuration 54, or in the pentagon connection configuration 55, illustrated in FIG. 9.

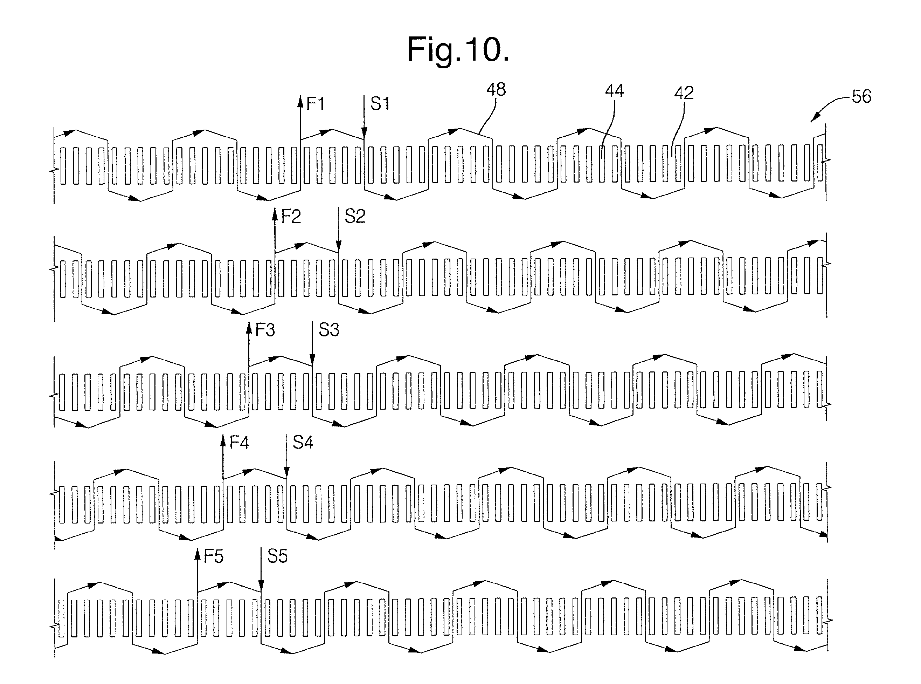

FIG. 10 illustrates an alternative winding pattern 56 for the stator which is applicable to any embodiment and referred to as a wave wind pattern. Therein the copper wires 48 are not wound around adjacent groups of five stator slots 42 but rather turned out after every fifth slot and advanced five slots.

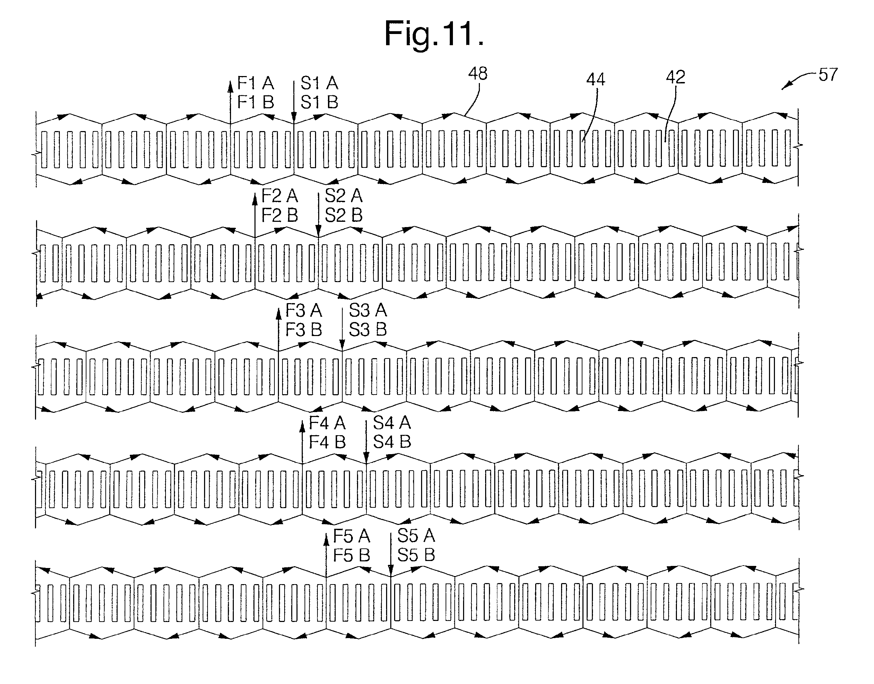

FIG. 11 illustrates a specific embodiment of the invention with a winding pattern 57 that includes two parallel sets of 5-phase windings as herein above described. A first set of five phase stator windings given the designation A is wound onto ring 40 as herein above described. A second set of five phase stator windings given the designation B is also wound onto ring 40 as herein above described. The A and B phase windings allow for winding smaller diameter wire in the stator slot openings. Using smaller wire provides for a smoother overall surface of the wound stator thereby reducing mechanical noise during operation.

Accordingly the above five phase stator AC generator embodiments utilize a reduced number of slots 42 vis-a-vis a dual three-phase type machine and require two fewer diodes. In addition, there is a reduced ripple vis-a-vis a conventional 3-phase generator on the generator output.

Comparing a 5 phase machine to a 3 phase machine, a similar reduction in torque ripple occurs for the 5 phase machine. The 6th harmonic torque ripple of a conventional three phase machine is primarily due to the interaction of the fundamental current with the 5th and 7th harmonic EMFs and the fundamental EMF interacting with the 5th and 7th phase current harmonics. The lowest harmonic torque expected for a five phase machine is the 10th harmonic. The 10th harmonic being the result of the interaction of the fundamental current with the 9th and 11th harmonic EMFs and the fundamental EMF interacting with the 9th and 11th phase current harmonics.

Because the 9th and 11th harmonics of EMF and current are of lower magnitude than the 5th and 7th harmonics the result is that the 10th order torque pulsation of the five phase machine is less than the 6th order torque pulsation of a three phase machine.

This can be shown more rigorously for the EMF harmonics by calculating the expected relative harmonic content for the machine from the classical winding pitch, distribution, and skew factors and for the current harmonics from the fourier series of the impressed phase voltage from the diode bridge for the 3 and 5 phase machines, the 3 phase diode bridge impressing a six-step voltage waveform and the 5 phase impressing a 10 step voltage waveform.

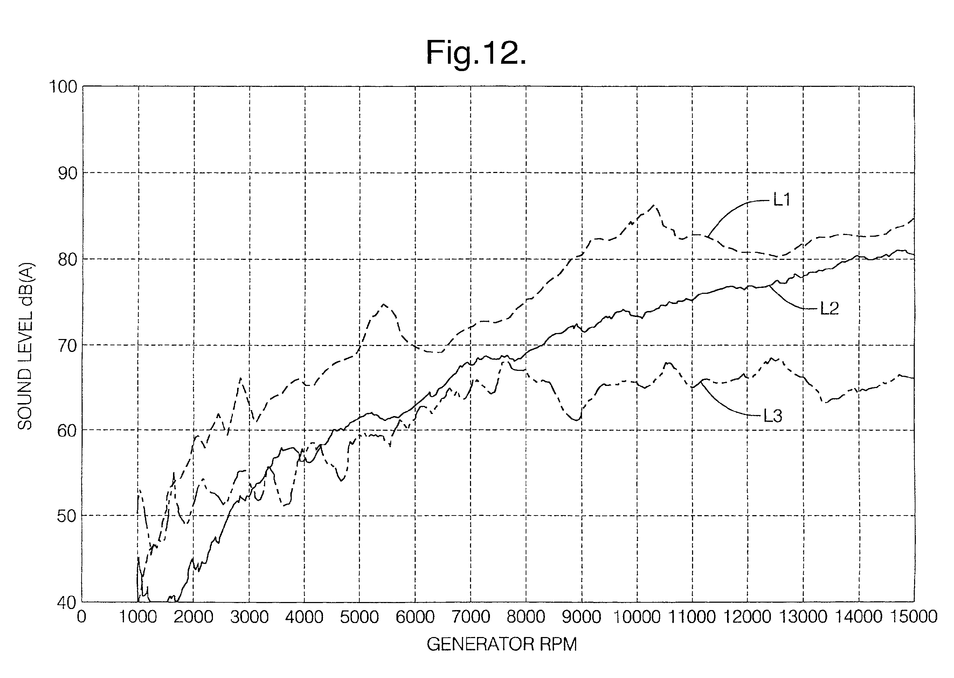

FIG. 12 is a graph illustrating the generator magnetic noise levels for a standard 3-phase generator and the herein described 5-phase generator. The 36th order noise level as a function of generator speed is contrasted for both a standard 3-phase generator, line L1, and 5-phase generator, line L2, and the 60th order noise level for the 5-phase generator, line L3 is plotted. As can be seen there is a significant reduction in 36th order magnetic noise afforded by the 5-phase generator invention as compared to a standard 3-phase generator and the 60th order noise level falls well below the 36th order noise level.

As hereinabove described the five phase generator provides an advantage over a conventional three phase (or dual three phase) generator in DC output current with a rectified output. This is best exemplified in considering a three phase generator stator winding 58 and a five phase winding 62, each connected in a star configuration as shown in FIGS. 13 and 14 respectively. The rectifier diodes will begin to conduct DC current when the line to line generated EMF voltage exceeds the DC source voltage. Assuming each of the three and five phase machines have the same number of turns per coil, resulting in similar inductances, one can determine the relative line to line EMF voltage of the machines. From FIG. 13, the EMF phasors of each leg 64 of the three and five phase machines will be equal, given an equal number of turns per phase and equal speed and field current. However, the line to line voltage of the five phase machine will exceed that of the three phase machine given that the angle between two phase EMF vectors is closer to 180 degrees. From FIG. 13, for the three phase machine the line to line EMF relative to the phase EMF is found to be

$$Emfl\text{-}1 = 2\sin(120/2)EMFph = 1.732\ EMFph$$

and for the five phase machine, FIG. 14,

$$Emfl\text{-}1 = 2\sin(144/2)EMFph = 1.902\ EMFph$$

Hence the five phase machine will provide sufficient EMF to forward bias the rectifying diodes at a lower speed (1.732/1.902=.911 times the speed) and provide approximately 1.098 (1.902/1.732) times the electrical power at high speeds.

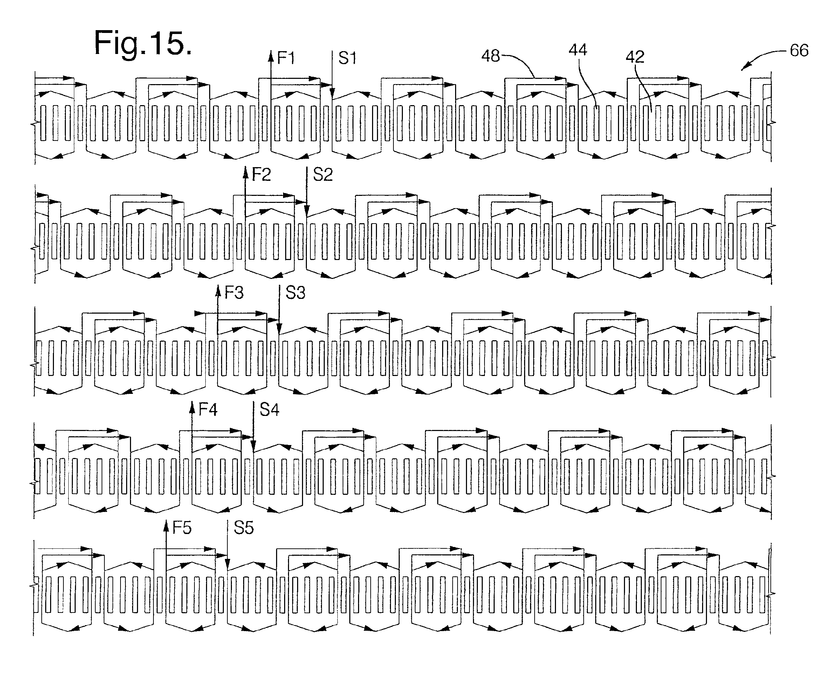

It should also be understood that such machines can be wound, as with conventional three phase machines, in a full or short pitch configuration. A short pitch winding configuration 66 is illustrated in FIG. 15. Therein the coil of wire 48 is not wound around five teeth 44 but may be wound around fewer than five teeth. This serves the purpose of reducing various airgap MMF harmonics and reducing machine noise as well as providing for a potential reduction in stator phase resistance from the shorter winding end turn length.

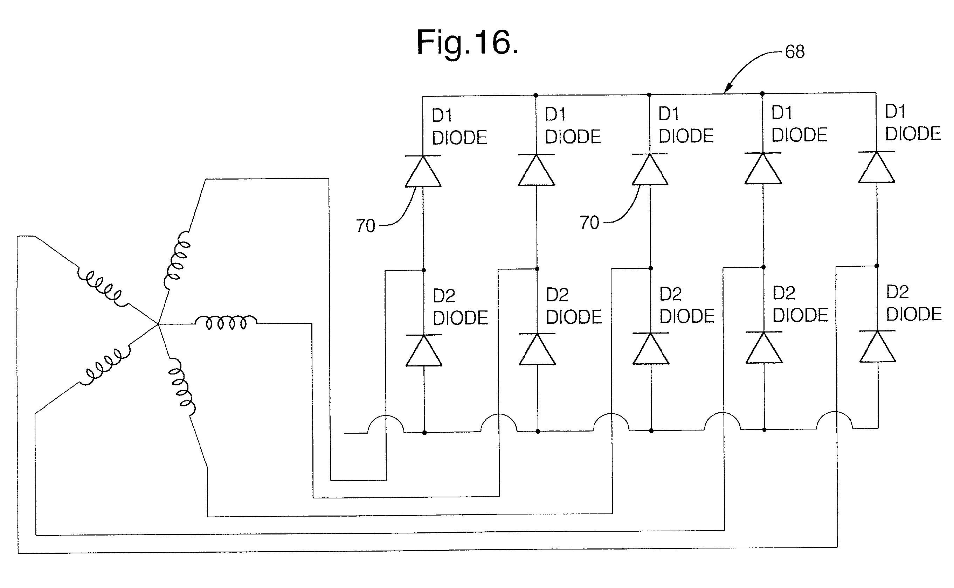

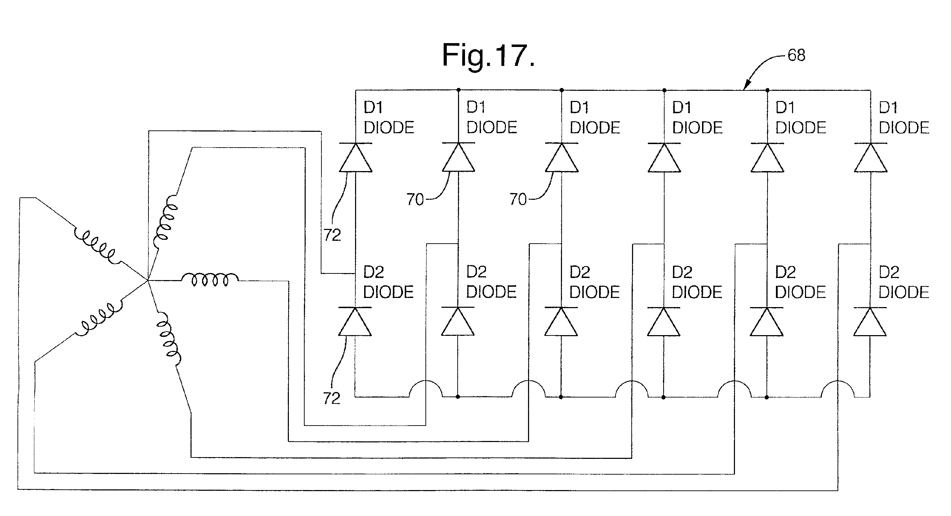

The five phase machine is applied to a rectifier bridge 68 as shown in FIG. 16. Such a machine is configured in a manner much like a three phase machine, but with the use of ten diodes 70 rather than the typical six. As with the three phase machine, additional output can be extracted from the five phase machine by tapping the zero sequence current from the neutral of the star connected machine. While in a three phase machine, this current will be third harmonic stator current, in the five phase machine this will be fifth harmonic current. One would expect that fifth harmonic EMF, in a five phase machine, will be lower in magnitude than the third harmonic EMF of a three phase machine, leading to a lower zero sequence current component. However the zero sequence current may be useful and desirable. Such a configuration for a five phase machine, with a diode pair 72 included to capture zero sequence current is shown in FIG. 17.

While the invention has been described by reference to certain preferred embodiments, it should be understood that numerous changes could be made within the spirit and scope of the inventive concepts described. Accordingly, it is intended that the invention not be limited to the disclosed embodiments, but that it have the full scope permitted by the language of the following claims.

## Claims

1. An alternating current (AC) generator (20) comprising:

   a casing (22) defining an accommodation space (24) therein;
   a stator assembly (26) supported in said accommodation space (24) in said casing (22);
   said stator assembly (26) including stator slots/teeth (42, 44) and a 5-phase winding (46) distributed through and among said stator teeth (44);
   a rotor assembly (28) including a plurality of pairs of opposed pole members (36) rotatably disposed inside said stator assembly (26);
   said pairs of pole members (36, 38) configured for energization in opposite magnetic polarity; and
   a plurality of rectifiers (68) to rectify output voltages generated by the 5-phase winding.

2. The AC generator (20) of claim 1 wherein the number of stator slots, $S_1$, is represented by $S_1=10np$ where $n$ is any integer and $p$ is the number of rotor pole pairs (36, 38).

3. The AC generator (20) of claim 1 wherein said stator slots (42) number 10 times the number of pole pairs (36, 38).

4. The AC generator (20) of claim 2 wherein said stator slots (42) number 60.

5. The AC generator (20) of claim 4 wherein a majority of the 5-phase winding (46) is wound around five stator teeth (44) then advanced five stator teeth (44) and again wound around five stator teeth and repeated until all the stator teeth are wound.

6. The AC generator (20) of claim 4 wherein each phase winding (46) is woven through a slot (42), turned out and run along said five stator teeth (44), woven through an adjacent slot (42), turned out and run along side five stator teeth (44), and repeated to configure a wave wind until all the stator teeth (44) are included.

7. The AC generator (20) of claim 4 wherein each phase winding (46) of the five, 5-phase windings is offset two stator teeth (44) from the adjacent phase winding (46).

8. The AC generator (20) of claim 1 including a diode pair (72) to capture zero sequence current.

# Fig.1.

# Fig.2.

40 3 26 42

# Fig.3.

26 42 44

EP 1 296 439 A2

# Fig.4.

EP 1 296 439 A2

Fig.5.

Fig.6.

Fig.8.

Fig.9.

Fig.13.

Fig.14.

# Fig.7.

EP 1 296 439 A2

Fig.10.

# Fig.11.

EP 1 296 439 A2

Fig.12.

Fig.15.

Fig.16.

Fig.17.